# EUROPÄISCHE PATENTSCHRIFT

(11) **EP 0 904 141 B1**
(45) Veröffentlichungstag und Bekanntmachung des Hinweises auf die Patenterteilung: **27.06.2001**
(21) Anmeldenummer: 97929099.6
(22) Anmeldetag: 06.06.1997
(51) Int. Cl.: B01D 35/30, B01D 46/24, B01D 46/42

(54) **FILTERGEHÄUSE MIT UNGLEICHFÖRMIGER RIPPE**
FILTER HOUSING WITH IRREGULAR RIB
BOITIER DE FILTRE A NERVURE IRREGULIERE

(30) Priorität: 11.06.1996 DE 19623190
(43) Veröffentlichungstag der Anmeldung: 31.03.1999
(73) Patentinhaber: Ing. Walter Hengst GmbH & Co. KG, 48147 Münster (DE)
(72) Erfinder: SCHUMANN, Heiko, D-48145 Münster (DE); RENNER, Volker, D-48165 Münster (DE)
(74) Vertreter: Habbel, Ludwig (Lutz), Dipl.-Ing.
(86) Internationale Anmeldenummer: DE9701198
(87) Internationale Veröffentlichungsnummer: WO9747371

(56) Entgegenhaltungen:
- EP-A- 0 634 203
- DE-A- 3 216 395
- DE-A- 4 344 588
- GB-A- 1 395 788
- US-A- 4 336 042

## Beschreibung

Die Erfindung betrifft ein Gehäuse nach dem Oberbegriff des Anspruches 1.

Es ist beispielsweise aus dem Automobilbau und dort aus dem Bereich der Kraftstoffilter bekannt, den topfartigen Sockel des Filtergehäuses aus Kunststoff zu fertigen. Gegenüber den früher verwendeten metallischen Filtergehäusen ergeben sich geringere Herstellungskosten sowie eine Gewichtseinsparung. Der Deckel ist dabei üblicherweise als Schraubverschluß ausgestaltet und ohne zusätzliche Schrauben o.dgl. unmittelbar mit dem Sockel verschraubt, indem Sockel und Deckel korrespondierende Außen- und Innengewinde aufweisen.

Je nach Betriebsdruck, der in den Filtergehäusen herrscht und in Abhängigkeit von den in der Filterumgebung herrschenden Temperaturen, kann es bei den verwendeten Kunststoffen zu einer Verringerung der Formsteifigkeit und zu einer Verformung kommen und dadurch zu einer geringfügigen Aufweitung des Sockels. Durch die vorhandenen weiteren Bauelemente, wie Flansche, Anschlüsse u. dgl. kann der Sockel radial bereichsweise versteift sein, so daß die Aufweitung des Sockels ungleichmäßig erfolgt und bei einem grundsätzlich runden Sockelquerschnitt also zu Unrundheiten des Sockels führt. Dadurch kann die Dichtigkeit zwischen dem Sockel und dem Deckel beeinträchtigt werden.

Es ist bekannt, Versteifungen in Form von Spannringen vorzusehen, die außen am Sockel im Dichtbereich von Sockel und Deckel vorgesehen sind. Mit "Dicht-Bereich" ist dabei die Zone bezeichnet, in der die Versteifungen angeordnet werden können und dabei die Steifigkeit des Sockels dort beeinflussen, wo dessen Abdichtung gegenüber dem Deckel erfolgt. Diese manschettenartigen Versteifungen in Form von Spannringen erhöhen die Montagekosten für das Filtergehäuse. Zudem legen sich derartige Manschetten gleichmäßig um den Umfang des Sockels, so daß die von innen auftretenden Kräfte aufgrund der partiellen Versteifung des Sockels mittels der weiteren Bauteile, wie Flansche, Anschlüsse u. dgl. nach wie vor eine Unrundheit des Sockels bewirken können, die durch die Versteifungsmaßnahme lediglich verringert wird.

Andere Versteifungsmaßnahmen können im Einlagern von Verstärkungsringen in der Gehäusewandung des Sockels liegen, jedoch verursachen diese Einlagerungen höhere Produktionskosten und können die Gefahr der stofflichen Unreinheiten bzw. Uneinheitlichkeit bergen, die für die Wiederverwertbarkeit des Filtergehäuses nachteilig sein kann.

Ein gattungsgemäßes Gehäuse ist aus der DE-OS 28 31 070 (dort Fig. 6) bekannt. Ein eckiger Deckel ist auf einem runden Sockel vorgesehen. Dabei weist der Sockel in seinem obersten, deckelnahen Bereich eine umlaufende Rippe auf, die der Kontur des Deckels folgt. Es ergeben sich an den Ecken Überstände gegenüber dem Sockel, so daß dort Schrauben vorgesehen werden können, um den Deckel mit dem Sockel zu verbinden, da der Deckel selbst nicht als Schraubverschluß ausgestaltet ist.

An zwei gegenüberliegenden Stellen münden nahe unterhalb der umlaufenden Rippe Anschlußstutzen in den Sockel. Wenn die Rippe der Kontur des Deckels folgt, weist die umlaufende Rippe nicht nur oberhalb der Anschlußstutzen, sondern auch an anderen Stellen gegenüber dem runden Sockel einen verringerten Querschnitt auf, so daß die Eigensteifigkeit des Sockels gegenüber von innen auftretenden Druckbeanspruchungen umfangsmäßig nicht gleichmäßig ist. Hieraus kann je nach Wahl des Werkstoffs und der Wandstärke des Sockels eine Undichtigkeit zwischen Sockel und Deckel resultieren.

Der Erfindung liegt die Aufgabe zugrunde, mit möglichst einfachen Mitteln eine gute Konturstabilität des Sockels in dessen Dichtbereich und damit eine gute Dichtigkeit des Filtergehäuses zu ermöglichen und eine preisgünstige Herstellung des Filtergehäuses zu ermöglichen.

Diese Aufgabe wird durch ein Gehäuse mit den Merkmalen des Anspruches 1 gelöst.

Die Erfindung schlägt mit anderen Worten vor, am Sockel des Filtergehäuses eine oder mehrere umlaufende Rippen vorzusehen, die im Dichtbereich zwischen dem Sockel und dem Deckel vorgesehen sind, so daß eine Versteifung des Sockels in einer Zone erfolgt, die die Konturstabilität des Gehäuses dort, wo die Abdichtung zwischen Sockel und Deckel erfolgt, unterstützt. So wird einer Aufweitung des Sockels dort entgegengewirkt, wo es auf die Dichtigkeit der Verbindung zwischen Sockel und Deckel ankommt. Die Anordnung einer oder mehrerer Rippen dient also nicht der Schaffung von Verankerungsflächen zur Aufnahme von Schrauben, wie dies bei den gattungsbildenden Gehäuse der Fall ist. Sie ermöglicht vielmehr die preisgünstige Ausgestaltung eines dünnwandigen Gehäuses, das im Betrieb durchaus bereichsweise nachgiebig sein kann, das jedoch dort, wo die Abdichtung zwischen Deckel und Sockel erfolgt, formstabil ist und Undichtigkeiten ausschließt.

Über die grundsätzliche Versteifung des Sockels in diesem Dichtbereich hinaus, die durch die Rippe ohnehin erzielt wird, wird erfindungsgemäß eine möglichst exakte Beibehaltung der vorgegebenen Kontur des Sockels ermöglicht, indem die umlaufende Rippe einen unterschiedlichen Querschnitt aufweist und dort schwächer ist, wo ohnehin eine partielle Versteifung des Sockels durch die weiteren Bauteile erfolgt, die an die Sockelwandung anschließen. Der Versteifungseffekt durch diese weiteren Bauteile und durch die Rippe ergänzt sich radial umlaufend um den Sockel derart, daß bei einer Druckbeanspruchung der Sockel im Dichtbereich zwischen Sockel und Deckel diesem Druck einen umfangsmäßig nahezu gleichen Widerstand entgegensetzt und daher konturstabil bleibt.

Eine für die Herstellung besonders einfache Unterschiedlichkeit des Rippenquerschnittes kann dadurch erzielt werden, daß die Rippe sich von der Wandung des Sockels unterschiedlich weit erstreckt und dort näher an die Wandung herangezogen ist, wo die weiteren Bauteile an die Sockelwandung anschließen.

Die Rippe muß erfindungsgemäß den Sockel nicht vollständig umschließen oder vollständig um den Sockel umlaufen. Je nach Stärke der Rippe und ihrem Verstärkungseffekt für die Sockelwandung kann daher vorgesehen sein, daß die Rippe dort, wo weitere Bauelemente an die Sockelwandung anschließen, in die Sockelwandung eintaucht, d. h. daß dort die Rippenausdehnung bis auf Null zurückgeht.

Da eine Schraubverbindung zwischen Deckel und Sockel vorgesehen ist, so können vorteilhaft mehrere Rippen vorgesehen sein, um über dem ganzen Gewindebereich eine möglichst gleichmäßige Aussteifung des Sockels zu erzielen und auf diese Weise die Dichtigkeit der Verbindung zwischen Sockel und Deckel zu gewährleisten. Durch die Anordnung mehrerer Rippen kann zudem eine optimale Steifigkeitsanpassung zur Kompensation der partiellen Versteifung durch die weiteren Bauelemente erfolgen, so daß nicht nur radial, sondern auch axial eine sehr exakte Konturbeständigkeit des Sockels im Dichtbereich erzielt wird.

Überraschend hat sich in Versuchen gezeigt, daß die Konturstabilität des Sockels auch dadurch unterstützt werden kann, daß die Rippe nicht nur dort geschwächt wird, wo die weiteren Bauelemente an die Sockelwandung anschließen, sondern auch dort, wo die Sockelwandung frei von derartigen angeformten Bauelementen ist. Mit Hilfe derartiger weiterer oder zusätzlicher Querschnittsverringerungen, die bis zu einer Reduzierung des Rippenquerschnittes auf Null, also bis zu einer Unterbrechnung der Rippe ausgestaltet sein können, läßt sich insbesondere eine Feinabstimmung erzielen, mit der letzte Abweichungen vom gewünschten Konturverlauf des Sockels korrigiert werden können, die sich unter den Betriebsbedingungen des Filters ergeben könnten.

Die derart querschnittsreduzierten Bereiche können versetzt von dem Umfangsbereich, in dem die weiteren Bauelemente an die Sockelwandung anschließen, um einen Winkel von wenigen Grad, beispielsweise 10°, bis zur diametral gegenüberliegenden Position, also in einem Winkel von 180°, vorgesehen sein, wobei insbesondere unter Zuhilfenahme moderner Rechenanlagen die ideale Lage und das ideale Ausmaß der Querschnittsverminderung bestimmt werden kann, um diese Feinabstimmung des Konturverlaufs des Sockels zu bestimmen.

Ein Ausführungsbeispiel der Erfindung wird anhand der Zeichnungen im folgenden näher erläutert. Dabei zeigt
- Fig. 1: eine Seitenansicht eines Kraftstofffiltergehäuses, teilweise weggebrochen,
- Fig. 2: einen Horizontalschnitt durch das Gehäuse von Fig. 1 mit Blickrichtung nach oben, und
- Fig. 3: eine Draufsicht auf den Sockel der Fig. 1 und 2 bei entferntem Deckel.

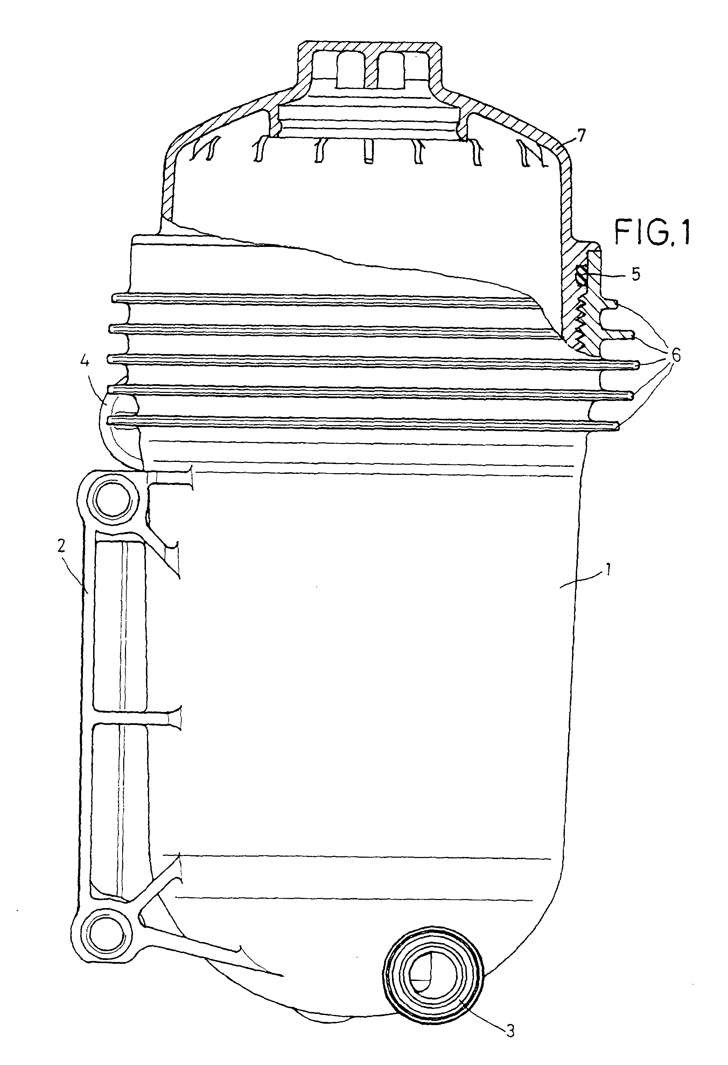

In Fig. 1 ist mit 1 der topfartige Sockel eines Filtergehäuses bezeichnet, wobei es sich um das Gehäuse eines Kraftstoffilters handeln kann. Der Sockel 1 weist einen angeformten Träger 2 auf zur Befestigung des Kraftstoffilters an einem Fahrzeug, beispielsweise im Motorraum. Weiterhin weist der Sockel 1 Anschlußstutzen 3 und 4 auf, die zur Zufuhr und Abfuhr des Kraftstoffes dienen. Der Sockel 1 kann mit einem Deckel 7 an seinem oberen Ende verschlossen werden, wobei der Deckel 7 als Schraubverschluß ausgestaltet ist und ein Gewinde aufweist, welches mit einem korrespondierenden Gewinde des Sockels 1 zusammenwirkt.

Die Abdichtung zwischen dem Sockel 1 und dem Deckel 7 kann durch deren beiden Gewinde selbst erfolgen oder vorteilhaft durch eine zusätzliche Dichtung 5, die beispielsweise als O-Ring ausgestaltet ist.

Als Dichtbereich ist dabei der Bereich des Sockels 1 bezeichnet, dessen Verformung Einfluß auf die Dichtigkeit der Dichtung 5 hat und diese Dichtigkeit beeinträchtigen kann. Der Träger 2 sowie die Anschlußstutzen 3 und 4 stellen Bauelemente dar, die einstückig zusammen mit dem Sockel 1 hergestellt und an die Sockelwandung angeformt sind. Der Anschlußstutzen 4 und ggf. auch der Träger 2 münden im Dichtbereich oder zumindest in der Nähe des Dichtbereiches in die Sockelwandung, so daß sie die Steifigkeit und Formstabilität des Sockels 1 im Dichtbereich beeinflussen können.

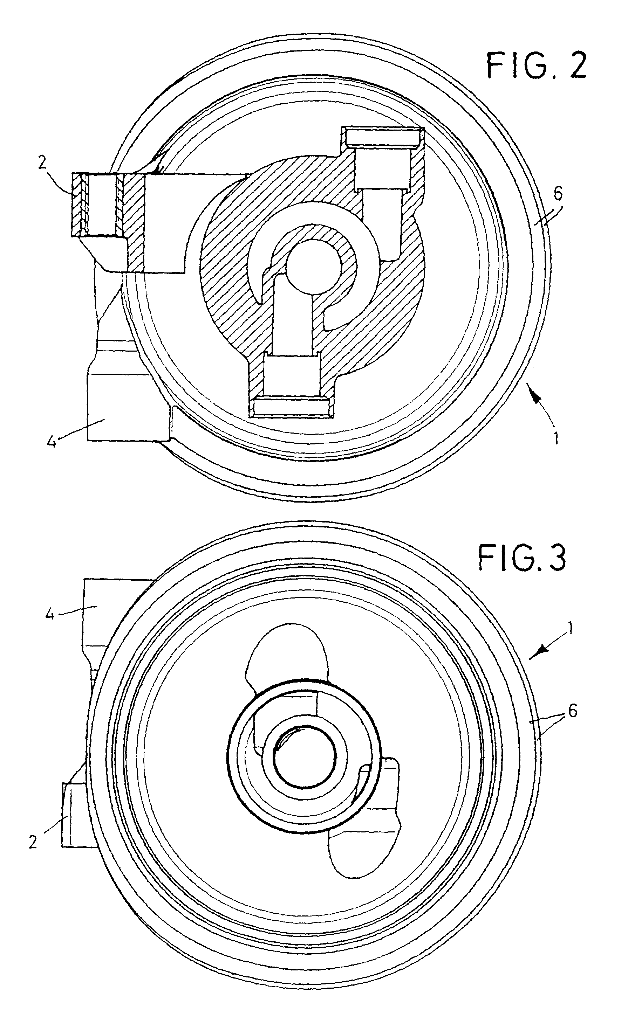

Wie aus Fig. 2 deutlich wird, mündet der obere Anschlußstutzen 4 nicht radial in die Sockelwandung, sondern geht tangential in die Wandung des Sockels 1 über.

Wie aus den beiden erwähnten Darstellungen sowie aus Fig. 3 ersichtlich ist, umfaßt der Sockel 1 in dem Dichtbereich zwischen dem Sockel 1 und dem Deckel 7 fünf Rippen 6. Die Rippen 6 erstrecken sich radial von der Wandung des Sockels 1 über den Umfang der Rippen 6 unterschiedlich weit nach außen. Wo eine partielle Versteifung des Sockels 1 ohnehin durch den Träger 2 und den Anschlußstutzen 4 erfolgt, weisen die Rippen 6 einen geringeren Querschnitt auf und bewirken damit eine geringere Versteifung des Sockels 1 im Vergleich zu den übrigen Umfangsbereichen, in denen die Rippen 6 an den Sockel 1 angeformt sind.

Auf diese Weise wird durch die Rippen 6 einerseits und durch die weiteren Bauelemente in Form des Trägers 2 und des Anschlußstutzens 4 andererseits eine über den Umfang des Sockels 1 gleichmäßige Versteifung des Sockels im Bereich der Abdichtung zum Deckel 7 erzielt, so daß bei von innen auftretenden Druckbelastungen die vorgesehene kreisrunde Kontur des Sockels 1 beibehalten wird und die Dichtigkeit zwischen dem Sockel 1 und dem Deckel 7 gewährleistet ist.

Entsprechend der Querschnittskontur eines Sockels, die von der rein beispielhaft dargestellten Kreisform abweichen kann und entsprechend der Anzahl, Größe und Anordnung der an die Sockelwandung anschließenden Bauelemente können die vorgesehenen Rippen erfindungsgemäß von dem dargestellten Ausführungsbeispiel abweichend ausgestaltet sein. Es kann auch abweichend von dem dargestellten Ausführungsbeispiel vorgesehen sein, daß die Rippen zwar radial um den Sockel umlaufen, jedoch nicht vollständig, sondern lediglich bereichsweise. Weiterhin kann abweichend von dem dargestellten Ausführungsbeispiel vorgesehen sein, daß der Versteifungseffekt der Rippen nicht durch deren unterschiedliche radiale Abmessungen erzielt wird, sondern durch deren Dicke oder durch andere geometrische Veränderungen.

## Patentansprüche

1. Gehäuse für einen Filter,
mit einem topfartigen Sockel (1),
und mit einem den Sockel (1) druckdicht verschließenden Deckel (7),
und mit einem oder mehreren weiteren Bauelementen wie Stutzen (3,4), Flansche od. dgl., die im Bereich der Abdichtung zwischen Sockel (1) und Deckel (7) an die Sockelwandung anschließen,
und mit wenigstens einer in diesem Bereich radial um den Sokkel (1) umlaufenden Rippe (6),
wobei die Rippe (6) entlang dem Sockelumfang ungleichmäßig groß ausgebildet ist
und wobei die Rippe (6) in dem Bereich, in dem die weiteren Bauelemente an die Sockelwandung anschließen, einen verringerten Querschnitt aufweist,
dadurch gekennzeichnet, daß
der Deckel (7) und der Sockel (1) mittels korrespondierender Gewinde unmittelbar miteinander verschraubt sind, und daß
die Querschnittsveränderung der Rippe (6) eine umfangsmäßig nahezu gleiche Steifigkeit des Sockels (1) gegenüber einer innen auftretenden Druckbeanspruchung ausbildend ausgestaltet ist.

2. Gehäuse nach Anspruch 1, dadurch gekennzeichnet, daß im Bereich der weiteren Bauelemente die Rippe (6) die gleiche Dicke, aber eine verringerte radiale Ausdehnung von der Sokkelwandung aufweist.

3. Gehäuse nach Anspruch 1oder 2, dadurch gekennzeichnet, daß in dem Bereich der Abdichtung zwischen Sockel (1) und Deckel (7) urnfangsmäßig auch dort, wo die Sockelwandung frei von weiteren Bauelemente ist, die Rippe (6) einen oder mehrere Bereiche mit einem verringerten Querschnitt aufweist.

## Claims

1. A housing for a filter,
comprising a bowl-like base (1)
and comprising a cover (7) which effects a pressure-tight closure of the base (1),
and comprising one or more further structural members such as connection pieces (3, 4), flanges or the like, which adjoin the base wall in the region of the seal between the base (1) and the cover (7),
and comprising at least one rib (6) which encircles the base (1) radially in this region,
wherein the rib (6) is formed with an uneven size along the periphery of the base, and wherein the rib (6) has a reduced cross-section in the region in which the further structural members adjoin the base wall,
characterised in that
the cover (7) and the base (1) are screwed together directly by means of corresponding screw threads, and that
the change in cross-section of the rib (6) is designed to ensure an approximately constant stiffness of the base (1), along the periphery thereof, in relation to the action of pressure which occurs from the inside.

2. A housing according to claim 1, characterised in that in the region of the further structural members the rib (6) has the same thickness but has a reduced radial extent from the base wall.

3. A housing according to claims 1 or 2, characterised in that in the region of the seal between the base (1) and the cover (7), and also along the periphery where the base wall is free from further structural members, the rib (6) comprises one or more regions of reduced cross-section.

## Revendications

1. Boîtier de filtre avec un socle (1) formant un pot, un couvercle (7) fermant le socle (1) de façon étanche à la pression, et avec un ou plusieurs autres éléments structurels tels que des piquages (3, 4), des brides ou similaires, qui se raccordent à la paroi du socle au niveau de l'étanchéité entre le socle (1) et le couvercle (7), et avec au moins une nervure (6) faisant le tour du socle (1) dans le sens radial dans cette zone,
dans lequel la nervure (6) a une taille non uniforme sur la circonférence du socle,
et dans lequel la nervure (6) présente une section réduite dans la zone où les autres éléments structurels se raccordent au socle,
caractérisé en ce que le couvercle (7) et le socle (1) sont vissés directement l'un sur l'autre au moyen de filetages correspondants, et en ce que la modification de la section de la nervure (6) est conçue de manière à obtenir une rigidité approximativement égale du socle (1) contre une contrainte de pression exercée à l'intérieur.

2. Boîtier selon la revendication 1, caractérisé en ce que la nervure (6) présente la même épaisseur, mais une extension radiale réduite à partir de la paroi du socle dans la zone des autres éléments structurels.

3. Boîtier selon la revendication 1 ou 2, caractérisé en ce que la nervure (6) présente une ou plusieurs zones de section réduite sur la circonférence au niveau de l'étanchéité entre le socle (1) et le couvercle (7), même à des endroits où la paroi du socle ne porte pas d'autres éléments structurels.
